# EUROPEAN PATENT SPECIFICATION

(11) **EP 3 090 515 B1**
(45) Date of publication and mention of the grant of the patent: **29.04.2020**
(21) Application number: 14876787.4
(22) Date of filing: 09.12.2014
(51) Int. Cl.: H04L 12/803, H04L 29/02, H04L 29/08, H04L 29/06

(54) **COMMUNICATION NETWORK WITH LOAD BALANCING FUNCTIONALITY**
KOMMUNIKATIONSNETZ MIT LASTAUSGLEICHSFUNKTION
RÉSEAU DE COMMUNICATION À FONCTIONNALITÉ D'ÉQUILIBRAGE DE CHARGE

(30) Priority: 30.12.2013 US 201314143526
(43) Date of publication of application: 09.11.2016
(73) Proprietor: Alcatel Lucent, 91620 Nozay (FR)
(72) Inventor: VAN BEMMEL, Jeroen, Ottawa, Ontario K2K 2E6 (CA)
(74) Representative: Louis Pöhlau Lohrentz
(86) International application number: PCT/CA2014/051186
(87) International publication number: WO 2015/100488

(56) References cited:
- US-A1- 2009 138 582
- US-A1- 2011 185 065
- US-A1- 2012 246 637
- US-A1- 2012 311 159
- US-B1- 6 950 848

## Description

### Field

The application relates generally to communication networks, and more particularly to communication protocols implementing load balancing functionality.

### Background

Load balancing solutions in communication networks have been around for decades. For example, consider a content delivery network or content distribution network (CDN) wherein a large number of servers are deployed in distributed data centers across the Internet. A CDN serves content to end-users (i.e., "client device," "user device," "user," "client"). Content may include, but is not limited to, web objects (e.g., text, graphics, and scripts), downloadable objects (e.g., media files, software, documents), applications (e.g., e-commerce, portals), streaming media, and social network content.

In CDN solutions, load balancing of requests for content is achieved through Hypertext Transfer Protocol (HTTP) redirection. HTTP is described in the Internet Engineering Task Force (IETF) Request for Comments (RFC) 2616, "Hypertext Transfer Protocol - HTTP/1.1," June 1999; and IETF RFC 2617, "HTTP Authentication: Basic and Digest Access Authentication," June 1999, which are incorporated by reference herein. A HTTP GET request for content is first sent from a client to a "service node," which selects a delivery appliance for handling the request based on location (relative proximity to the client), load, and content being requested. The service node then sends a 302 HTTP redirect response, which causes the client to initiate a second HTTP connection (with the selected delivery appliance).

Drawbacks of the above approach include the overhead of setting up two connections for each content request, and the additional latency introduced, both of which can represent large overhead especially in cases of relatively small content (such as application programming interface (API) requests).

Moreover, this approach does not protect against attacks such as SYN flooding; both the distribution server and the content delivery servers are directly exposed to the Internet, and can be individually targeted. SYN flooding is a form of a denial-of-service attack wherein an attacker sends a succession of SYN requests to a system in an attempt to overload the system's ability to respond to legitimate requests. A SYN request is part of handshake procedure in the Transmission Control Protocol (TCP). TCP is described in the IETF RFC 793, "Transmission Control Protocol, DARPA Internet Program, Protocol Specification," September 1981.

A second known load balancing method is called "Distributed TCP" as described in an article by R. Kokku et al., "Distributed TCP: An Efficient Infrastructure to Support Persistent Connections," IBM Research, 2000. Although this approach avoids the overhead of a second connection setup, it is stateful and adds overhead in case multiple backend servers are involved sequentially. Also, this distributed TCP approach is not transparent to applications.

A conventional technique for processing TCP statelessly involves the use of so-called SYN cookies, see, IETF RFC 4987, "TCP SYN Flooding Attacks and Common Mitigations," August 2007. Based on this SYN cookie approach, encoding of state in the TCP initial sequence number and/or timestamp value is known.

US 2011/185065 A1 discloses a load balancer that dynamically load balances packets for network connections between clients and servers.

US 2012/311159 A1 discloses cloud computing platforms having computer-readable media that perform methods for direct addressability and direct server return.

US 2012/246637 A1 discloses methods for balancing in-path load in a virtual machine environment by using a distributed load balancer.

### Summary

Illustrative embodiments of the invention provide improved load balancing techniques for use in a communication network. While embodiments are applicable to varied types of communication networks, one or more embodiments are particularly well-suited for use in a TCP-based network environment.

The invention is defined by a method according to claim 1, an apparatus according to claim 6, a method according to claim 7 and an apparatus according to claim 8. Further embodiments are set out in the dependent claims.

Advantageously, illustrative embodiments provide content-based, stateless load balancing functionality that overcomes the above and other drawbacks associated with TCP-based communications protocols and the like.

These and other features and advantages of the present invention will become more apparent from the accompanying drawings and the following detailed description.

### Brief Description of the Drawings

FIG. 1 shows a communication network environment in which one or more embodiments of the invention are implemented.
FIG. 2 shows a content-based, stateless load balancing methodology according to an embodiment of the invention.
FIG. 3 shows a processing platform on which networks and methodologies according to one or more embodiments of the invention can be implemented.

### Detailed Description

Illustrative embodiments of the invention will be described herein with reference to exemplary communication networks, user devices, network nodes, and associated communication protocols. It should be understood, however, that embodiments of the invention are not limited to use with the particular arrangements described, but are instead more generally applicable to any communication network application in which it is desirable to provide improved performance by providing content-based, stateless load balancing functionality.

As illustratively used herein, the term "stateless" indicates that a processing device or software program is designed to not maintain one or more preceding events in a given sequence of interactions with a user, another processing device or software program. That is, each interaction request is handled based on information that comes with the request, thus there is no state stored (wherein "state" is a set of conditions at a particular time instance).

Further, it is to be understood that the terms "request," "response," "reply," "acknowledgement," and the like, are examples of messages that are transmitted via one or more communication protocols. Depending on the context, as will be understood by one of ordinary skill in the art given the teachings herein, such terms can be interchanged and thus the message name/type is not necessarily intended to limit the function of the message.

As mentioned above, while embodiments are applicable to varied types of communication networks, one or more embodiments are particularly well-suited for use in a TCP-based network environment. Accordingly, before describing content-based, stateless load balancing embodiments, an explanation of how a TCP connection is established will be given, as well as the conventional concept of SYN cookies used to mitigate SYN flooding attacks.

Before a client attempts to connect with a server in accordance with TCP, the server must first bind to and listen at a port in order to open the port up for connections. This is typically called a "passive open." Once the passive open is established, a client may initiate an "active open" to establish a connection. This is accomplished in TCP via a three-way handshake procedure as follows:
1. SYN: The active open is performed by the client sending a SYN message to the server. The client sets the sequence number of the segment to a random value X.
2. SYN-ACK: In response, the server replies with a SYN-ACK message. The acknowledgment number is set to one more than the received sequence number, i.e., X+1, and the sequence number that the server chooses for the packet is another random value Y.
3. ACK: The client sends an ACK message back to the server. The sequence number is set to the received acknowledgement value, i.e., X+1, and the acknowledgement number is set to one more than the received sequence number, i.e., Y+1.

Both the client and server, at this point, have received an acknowledgment of the connection. Accordingly, it is to be understood that steps 1 and 2 above serve to establish the connection parameter (sequence number) for one direction of the connection, and this parameter is acknowledged. Steps 2 and 3 serve to establish the connection parameter (sequence number) for the other direction of the connection, and this parameter is acknowledged. Following this three-way handshake procedure, a full-duplex connection is established between the client and the server.

In the SYN flooding attack, a malicious client sends a SYN to a server, and simply does not send the expected ACK back to the server. Alternatively, the malicious client can falsify the source Internet Protocol (IP) address in the SYN message, causing the server to send the SYN-ACK to the falsified IP address which will not send an ACK since it did not send the original SYN. In an attack, an increasingly large number of these half opened connections bind resources on the server until no new connections can be made, resulting in a denial of service to legitimate traffic.

The concept of SYN cookies has been proposed to avoid a SYN flooding attack. SYN cookies are defined as particular choices of initial TCP sequence numbers by TCP servers. More specifically, the use of SYN cookies allows a server to avoid dropping connections when its SYN queue fills up, presumably during a SYN flooding attack. Instead, the server effectively operates as if the SYN queue has been expanded. The server sends back the appropriate SYN-ACK response to the client but discards the SYN queue entry. If the server then receives a subsequent ACK response from the client, the server is able to reconstruct the SYN queue entry using information encoded in the TCP sequence number.

We now turn to a detailed description of embodiments of the invention that implement improved load balancing in a TCP-based network that avoids the HTTP redirection issue while also addressing the issue of SYN flooding.

Illustrative embodiments implement a stateless TCP load balancer frontend approach which answers the initial 3-way handshake (SYN, SYN-ACK, ACK) in a stateless way. Upon receiving a data segment (e.g., HTTP GET, SIP REGISTER, WebSocket connection with cookie, etc.), the load balancer selects a target server and forwards the request. The target server is patched to accept such "handed-off' connections and forwards its response packets directly to the client, inserting a specific timestamp header which the client echoes in its ACKs. After finishing its response, the target server inserts a special value signaling to the load balancer to select a next (possibly different) server upon the next data segment, and closes its connection (without signaling the closure to the client).

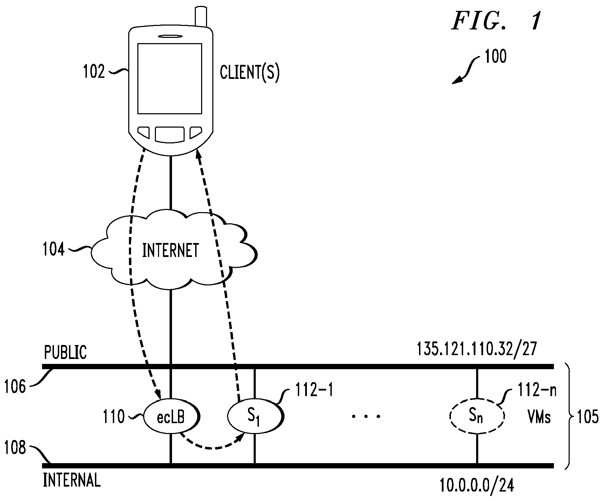

FIG. 1 illustrates a single-level TCP load balancing solution according to one embodiment of the invention. In this network environment, one or more clients (e.g., client 102) communicate with a data center 105 over a network (Internet) 104. It is assumed that the communication protocol includes TCP. The data center 105 is comprised of, *inter alia,* a frontend load balancer ecLB (110) and a plurality of backend servers S₁ through Sₙ (112-1 through 112-n). In this embodiment, the acronym "ecLB" refers to an elastic cloud load balancer. Load balancer ecLB 110 is implemented in this embodiment as a virtual machine (VM), although embodiments of the invention are not so limited. ecLB receives TCP packets from client(s) 102 on its public network interface 106, and communicates with backend servers 112-1 through 112-n on its internal network interface 108.

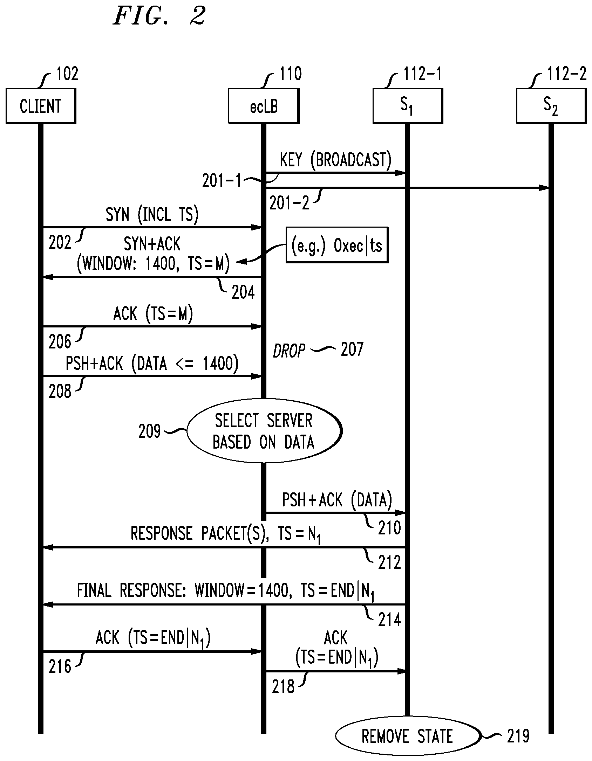

At startup and periodically, the load balancer 110 broadcasts a probe packet (which includes a key) onto the internal network 108, and all active servers (112-1 through 112-n) store the key and respond with their current load. In this way, the load balancer 110 discovers the set of available servers. The servers use the key for verifying incoming connections that have been accepted by the load balancer (on behalf of the backend servers). The dashed arrow lines in FIG. 1 between client, ecLB, and S₁ (...Sₙ) represent illustrative communication flow that will be further explained below in the context of FIG. 2.

FIG. 2 shows a content-based, stateless load balancing methodology according to an embodiment of the invention. Reference will be made to the same components shown in FIG. 1, with the assumption (only for the sake of simplicity of explanation) that there are two backend servers 112-1 and 112-2 (i.e., n = 2).

In steps 201-1 and 201-2, the load balancer ecLB 110 broadcasts a verification key to backend servers 112-1 and 112-2, respectively, as explained above.

In step 202, client 102 sends a SYN request to initiate a connection with the data center 105. The SYN request includes a timestamp option TS.

Upon receiving the SYN request containing the timestamp option TS, the load balancer 110 statelessly responds, in step 204, with a SYN-ACK response on behalf of the backend servers. The load balancer 110 inserts a specific value M as the timestamp which, in one embodiment, consists of a 24-bit representation of the current time (in milliseconds or ms) and a prefix value (e.g., 0xec). The load balancer 110 also inserts a limited window size (e.g., window: 1400 bytes), specifying that the client can send at most one frame worth of data.

In step 206, client 102 returns an ACK message to load balancer 110 with the timestamp set to M. However, in accordance with this illustrative embodiment, any subsequent ACK with TS = M but without data is silently discarded by the load balancer 110. By silently discarded, it is meant that the load balancer does not inform the client that its ACK was discarded. It is assumed that the ACK in step 206 is one of these types of ACK messages, and thus this ACK is dropped in step 207. It is to be appreciated that the load balancer 110 discards subsequent TCP ACK frames with the prefix/timestamp but without data (typically, one) in order to delay selecting a backend server until content is available.

In step 208, it is assumed that client 102 returns an ACK message to load balancer 110 with a data segment that matches the prefix (note that the PSH (push) flag in the TCP header informs the receiving host that the data should be pushed up to the receiving application immediately). The load balancer 110 checks the 24-bit timestamp in the ACK against the current time (allowing for wrap-around). If the timestamp was sent recently (e.g., less than 2000 milliseconds ago, which is selectable), the data is forwarded to a backend server, which is selected in step 209 based on the content of the data (amongst other factors, e.g., server load, server distance to client, server location, etc.). This content can be, for example, a HTTP URI (Uniform Resource Identifier), a SIP (Session Initiation Protocol) message with a From/To header, a WebSocket setup request with a session cookie denoting a specific backend server, etc. The load balancer 110 applies a cryptographic hash to parts of the forwarded packet, using the verification key it distributed to the backend servers.

The selected backend server (in this example, assumed to be server 112-1(S₁)) receives the data segment (PSH+ACK (data)) in step 210 and validates that it is authentic (using the key the server stored previously, after the broadcast step 201-1, per listening socket when handling a WebSocket request). When verified, the backend server 112-1 constructs its connection state and responds to the client directly (not through load balancer 110) with the response packet(s) in step 212. Note that the backend server 112-1 inserts a timestamp value N₁ in its response(s) sent in step 212. Timestamp value N₁ is a value that uniquely identifies this particular server. Each backend server has a unique timestamp value N assigned (e.g., backend server 112-2 has N₂, etc.). In step 214, the backend server 112-1 sends its last response directly (not through load balancer 110) to the client which includes also includes an 'end' value. This value is a bit in the N₁ timestamp field (e.g., bit31) denoting "end of content" (from the given backend server) to the client. The response in step 214 also specifies the window size limit.

In step 216, client 102 responds to load balancer 110 with an ACK message including N1 with the 'end' bit. Load balancer 110 uses N₁ to forward ACK packets to the correct backend server in a stateless way, e.g., to backend server 112-1 in step 218. In step 219, backend server 112-1 deletes any state associated with this particular request (originally initiated in step 202).

Note that when load balancer 110 next receives a data segment from client 102, the load balancer again selects a backend server (possibly different than the previous one), and forwards the new request to this selected server. In case the server is different, a copy of the request packet without the data is sent to the first server to acknowledge receipt (to stop retransmissions). The first server removes its state for the connection, without signaling the client.

Note that while illustrative embodiments of the invention modify conventional operations associated with backend servers, existing TCP clients and server applications (e.g., standard web servers such as nginx) do not have to be modified. It is also to be appreciated that illustrative embodiments of the invention can be implemented with other connection oriented protocols such as, but not limited to, IETF RFC 4960, "Stream Control Transmission Protocol," September 2007.

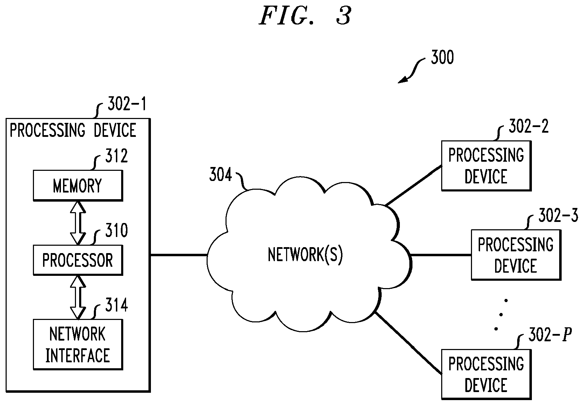

FIG. 3 illustrates a processing platform on which a communication network environment (e.g., 100 in FIG. 1) is implemented according to one or more embodiments of the invention. The processing platform 300 in this embodiment comprises a plurality of processing devices denoted 302-1, 302-2, 302-3, ... 302-P, which communicate with one another over a network 304. One or more of the elements of data center 105 (load balancer 110, backend servers 112-1 through 112-n) and client(s) 102 may therefore each run on one or more computers or other processing platform elements, each of which may be viewed as an example of what is more generally referred to herein as a "processing device." As illustrated in FIG. 3, such a device generally comprises at least one processor and an associated memory, and implements one or more functional modules for instantiating and/or controlling features of systems and methodologies described herein. Multiple elements or modules may be implemented by a single processing device in a given embodiment.

The processing device 302-1 in the processing platform 300 comprises a processor 310 coupled to a memory 312. The processor 310 may comprise a microprocessor, a microcontroller, an application-specific integrated circuit (ASIC), a field programmable gate array (FPGA) or other type of processing circuitry, as well as portions or combinations of such circuitry elements. Components of a system as disclosed herein can be implemented at least in part in the form of one or more software programs stored in memory and executed by a processor of a processing device such as processor 310. Memory 312 (or other storage device) having such program code embodied therein is an example of what is more generally referred to herein as a processor-readable storage medium. Articles of manufacture comprising such processor-readable storage media are considered embodiments of the invention. A given such article of manufacture may comprise, for example, a storage device such as a storage disk, a storage array or an integrated circuit containing memory. The term "article of manufacture" as used herein should be understood to exclude transitory, propagating signals.

Furthermore, memory 312 may comprise electronic memory such as random access memory (RAM), read-only memory (ROM) or other types of memory, in any combination. The one or more software programs when executed by a processing device such as the processing device 302-1 causes the device to perform functions associated with one or more of the components/steps of system/methodology 300. One skilled in the art would be readily able to implement such software given the teachings provided herein. Other examples of processor-readable storage media embodying embodiments of the invention may include, for example, optical or magnetic disks.

Also included in the processing device 302-1 is network interface circuitry 314, which is used to interface the processing device with the network 304 and other system components. Such circuitry may comprise conventional transceivers of a type well known in the art.

The other processing devices 302 of the processing platform 300 are assumed to be configured in a manner similar to that shown for processing device 302-1 in the figure.

The processing platform 300 shown in FIG. 3 may comprise additional known components such as batch processing systems, parallel processing systems, physical machines, virtual machines, virtual switches, storage volumes, logical units, etc. Again, the particular processing platform shown in FIG. 3 is presented by way of example only, and environment 100 of FIG. 1 may include additional or alternative processing platforms, as well as numerous distinct processing platforms in any combination.

Also, numerous other arrangements of servers, computers, storage devices or other components are possible. Such components can communicate with other elements of the system over any type of network, such as a wide area network (WAN), a local area network (LAN), a satellite network, a telephone or cable network, a storage network, a converged network or various portions or combinations of these and other types of networks.

Furthermore, it is to be appreciated that the processing platform 300 of FIG. 3 can comprise virtual machines (VMs) implemented using a hypervisor. A hypervisor is an example of what is more generally referred to herein as "virtualization infrastructure." The hypervisor runs on physical infrastructure. Processing platform 300 may also include multiple hypervisors, each running on its own physical infrastructure. As is known, VMs are logical processing elements that may be instantiated on one or more physical processing elements (e.g., servers, computers, processing devices). That is, a VM generally refers to a software implementation of a machine (i.e., a computer) that executes programs like a physical machine. Thus, different VMs can run different operating systems and multiple applications on the same physical computer. Virtualization is implemented by the hypervisor which is directly inserted on top of the computer hardware in order to allocate hardware resources of the physical computer dynamically and transparently. The hypervisor affords the ability for multiple operating systems to run concurrently on a single physical computer and share hardware resources with each other. In one embodiment, load balancer ecLB is implemented as a VM. Other elements in FIGs. 1 and 2 may be implemented as VMs in one or more embodiments of the invention.

Although certain illustrative embodiments are described herein in the context of communication networks utilizing particular communication protocols, other types of networks can be used in other embodiments. As noted above, the term "network" as used herein is therefore intended to be broadly construed. Further, it should be emphasized that the embodiments described above are for purposes of illustration only, and should not be interpreted as limiting in any way. Other embodiments may use different types of network, device and module configurations, and alternative communication protocols, process steps and operations for implementing load balancing functionality. The particular manner in which the user devices (e.g., clients) and network nodes (e.g., load balancers and backend servers) communicate can be varied in other embodiments. These and numerous other alternative embodiments within the scope of the appended claims will be readily apparent to those skilled in the art.

## Claims

1. A method, comprising:
receiving (202, 208), at a load balancer (110), a request from a client device (102);
selecting (209), at the load balancer (110), a processing device (112-1) from a set of processing devices (112-1, 112-2) in a communication network to serve the request;
forwarding (210) the request from the load balancer (110) to the selected processing device (112-1);
receiving (216) an acknowledgement at the load balancer (110) from the client device (102), wherein the acknowledgement comprises
an indication that the client device (102) has received a response to the request from the selected processing device (112-1) that has not passed through the load balancer (110); and
a unique value associated with the selected processing device (112-1);
forwarding (218), from the load balancer (110) to the selected processing device (112-1), the acknowledgement with the unique value and the indication, such that the selected processing device (112-1) deletes state information associated with the request.

2. The method of claim 1, wherein the selecting (209) of the processing device (112-1) is performed at least based on content associated with the request.

3. The method of claim 1, wherein the unique value associated with the selected processing device (112-1) comprises a timestamp value inserted by the selected processing device (112-1), wherein each processing device (112-1, 112-2) has a unique timestamp value assigned.

4. The method of claim 1, further comprising the load balancer (110) sending (204) an acknowledgement to the client device (102) upon receipt of the request.

5. The method of claim 1, further comprising the load balancer (110) receiving a value from the selected processing device (112-1) signaling the load balancer (110) to re-perform selection of a processing device (112-1) from the set of processing devices (112-1, 112-2) upon receipt of a subsequent request from the client device (102).

6. An apparatus, comprising:
a memory (312); and
a processor (310) operatively coupled to the memory (312) to form a load balancer (110) configured to:
receive a request from a client device (102);
select a processing device (112-1) from a set of processing devices (112-1, 112-2) in a communication network to serve the request;
forward the request to the selected processing device (112-1);
receive an acknowledgement from the client device (102), wherein the acknowledgement comprises
an indication that the client device (102) has received a response to the request from the selected processing device (112-1) that has not passed though the load balancer (110); and
a unique value associated with the selected processing device (112-1);
forward, to the selected processing device (112-1), the acknowledgement with the unique value and the indication, such that the selected processing device (112-1) deletes state information associated with the request.

7. A method, comprising:
receiving (210), from a load balancer (110) at a processing device (112-1) selected from a set of processing devices (112-1, 112-2) of a communication network by the load balancer (110), a request from a client device (102);
sending (212, 214) at least one response from the selected processing device (112-1) to the client device (102) without the response passing through the load balancer (110), wherein the response comprises a value inserted therein that is unique to the selected processing device (112-1);
receiving (218), at the selected processing device (112-1) from the load balancer (110), an acknowledgement sent (216) to the load balancer (110) by the client device (102), wherein the acknowledgement comprises the unique value associated with the selected processing device (112-1) and an indication that the client device (102) has received the response to the request from the selected processing device (112-1) that has not passed through the load balancer (110); and
deleting (219), at the selected processing device (112-1), state information associated with the request, upon receiving the acknowledgement.

8. An apparatus comprising a memory (312) and a processor (310) operatively coupled to the memory (312) to form a processing device (312-1) configured to:
receive a request from a load balancer (110) wherein the processing device (112-1) is selected from a set of processing devices (112-1, 112-2) of a communication network by the load balancer (110);
send at least one response to the client device (102) without the response passing through the load balancer (110), wherein the response comprises a value inserted therein that is unique to the selected processing device (112-1);
receive an acknowledgement from the load balancer (110), sent to the load balancer (110) by the client device (102), wherein the acknowledgement comprises the unique value associated with the selected processing device (112-1) and an indication that the client device (102) has received the response to the request from the selected processing device (112-1) that has not passed through the load balancer (110); and
delete state information associated with the request, upon receiving the acknowledgement.

## Patentansprüche

1. Verfahren, umfassend:
Empfangen (202, 208), an einem Lastausgleicher (110), einer Anforderung von einem Clientgerät (102);
Auswählen (209), am Lastausgleicher (110), eines Verarbeitungsgeräts (112-1) aus einer Menge von Verarbeitungsgeräten (112-1, 112-2) in einem Kommunikationsnetz, um die Anforderung zu bedienen;
Weiterleiten (210) der Anforderung vom Lastausgleicher (110) an das ausgewählte Verarbeitungsgerät (112-1);
Empfangen (216) einer positiven Quittung am Lastausgleicher (110) vom Clientgerät (102), wobei die positive Quittung Folgendes umfasst:
eine Meldung, dass das Clientgerät (102) eine Antwort auf die Anforderung vom ausgewählten Verarbeitungsgerät (112-1), die den Lastausgleicher (110) nicht passiert hat, empfangen hat; und
einen eindeutigen Wert, der dem ausgewählten Verarbeitungsgerät (112-1) zugeordnet ist;
Weiterleiten (218) der positiven Quittung mit dem eindeutigen Wert und der Meldung vom Lastausgleicher (110) an das ausgewählte Verarbeitungsgerät (112-1), damit das ausgewählte Verarbeitungsgerät (112-1) Statusinformationen, die der Anforderung zugeordnet sind, löscht.

2. Verfahren nach Anspruch 1, wobei das Auswählen (209) des Verarbeitungsgeräts (112-1) mindestens basierend auf Inhalt, der der Anforderung zugeordnet ist, durchgeführt wird.

3. Verfahren nach Anspruch 1, wobei der eindeutige Wert, der dem ausgewählten Verarbeitungsgerät (112-1) zugeordnet ist, einen Zeitstempelwert, der durch das ausgewählte Verarbeitungsgerät (112-1) eingefügt wird, umfasst, wobei jedem Verarbeitungsgerät (112-1, 112-2) ein eindeutiger Zeitstempelwert zugewiesen ist.

4. Verfahren nach Anspruch 1, das ferner umfasst, dass der Lastausgleicher (110) nach dem Empfang der Anforderung eine positive Quittung an das Clientgerät (102) sendet (204).

5. Verfahren nach Anspruch 1, das ferner umfasst, dass der Lastausgleicher (110) vom ausgewählten Verarbeitungsgerät (112-1) einen Wert, der dem Lastausgleicher (110) signalisiert, dass er nach dem Empfang einer darauffolgenden Anforderung vom Clientgerät (102) erneut eine Auswahl eines Verarbeitungsgeräts (112-1) aus der Menge von Verarbeitungsgeräten (112-1, 112-2) durchzuführen hat, empfängt.

6. Vorrichtung, umfassend:
einen Speicherbaustein (312); und
einen Prozessor (310), der betriebsfähig an den Speicherbaustein (312) gekoppelt ist, um einen Lastausgleicher (110) zu bilden, der für Folgendes konfiguriert ist:
Empfangen einer Anforderung von einem Clientgerät (102) ;
Auswählen eines Verarbeitungsgeräts (112-1) aus einer Menge von Verarbeitungsgeräten (112-1, 112-2) in einem Kommunikationsnetz, um die Anforderung zu bedienen;
Weiterleiten der Anforderung an das ausgewählte Verarbeitungsgerät (112-1);
Empfangen einer positiven Quittung vom Clientgerät (102), wobei die positive Quittung Folgendes umfasst:
eine Meldung, dass das Clientgerät (102) eine Antwort auf die Anforderung vom ausgewählten Verarbeitungsgerät (112-1), die den Lastausgleicher (110) nicht passiert hat, empfangen hat; und
einen eindeutigen Wert, der dem ausgewählten Verarbeitungsgerät (112-1) zugeordnet ist;
Weiterleiten der positiven Quittung mit dem eindeutigen Wert und der Meldung an das ausgewählte Verarbeitungsgerät (112-1), damit das ausgewählte Verarbeitungsgerät (112-1) Statusinformationen, die der Anforderung zugeordnet sind, löscht.

7. Verfahren, umfassend:
Empfangen (210), von einem Lastausgleicher (110) an einem durch den Lastausgleicher (110) aus einer Menge von Verarbeitungsgeräten (112-1, 112-2) eines Kommunikationsnetzes ausgewählten Verarbeitungsgerät (112-1), einer Anforderung von einem Clientgerät (102);
Senden (212, 214) mindestens einer Antwort vom ausgewählten Verarbeitungsgerät (112-1) an das Clientgerät (102), ohne dass die Antwort den Lastausgleicher (110) passiert, wobei die Antwort einen darin eingefügten eindeutigen Wert des ausgewählten Verarbeitungsgeräts (112-1) umfasst;
Empfangen (218), am ausgewählten Verarbeitungsgerät (112-1) vom Lastausgleicher (110), einer durch das Clientgerät (102) an den Lastausgleicher (110) gesendeten positiven Quittung (216), wobei die positive Quittung den eindeutigen Wert, der dem ausgewählten Verarbeitungsgerät (112-1) zugeordnet ist, und eine Meldung, dass das Clientgerät (102) die Antwort auf die Anforderung vom ausgewählten Verarbeitungsgerät (112-1), die den Lastausgleicher (110) nicht passiert hat, empfangen hat, umfasst; und Löschen (219), am ausgewählten Verarbeitungsgerät (112-1), von Statusinformationen, die der Anforderung zugeordnet sind, nach dem Empfangen der positiven Quittung.

8. Vorrichtung, umfassend einen Speicherbaustein (312) und einen Prozessor (310), der betriebsfähig an den Speicherbaustein (312) gekoppelt ist, um ein Verarbeitungsgerät (312-1) zu bilden, das für Folgendes konfiguriert ist:
Empfangen einer Anforderung von einem Lastausgleicher (110), wobei das Verarbeitungsgerät (112-1) durch den Lastausgleicher (110) aus einer Menge von Verarbeitungsgeräten (112-1, 112-2) eines Kommunikationsnetzes ausgewählt wird;
Senden mindestens einer Antwort an das Clientgerät (102), ohne dass die Antwort den Lastausgleicher (110) passiert, wobei die Antwort einen darin eingefügten eindeutigen Wert des ausgewählten Verarbeitungsgeräts (112-1) umfasst;
Empfangen einer positiven Quittung vom Lastausgleicher (110), die durch das Clientgerät (102) an den Lastausgleicher (110) gesendet wird, wobei die positive Quittung den eindeutigen Wert, der dem ausgewählten Verarbeitungsgerät (112-1) zugeordnet ist, und eine Meldung, dass das Clientgerät (102) die Antwort auf die Anforderung vom ausgewählten Verarbeitungsgerät (112-1), die den Lastausgleicher (110) nicht passiert hat, empfangen hat, umfasst; und
Löschen von Statusinformationen, die der Anforderung zugeordnet sind, nach dem Empfangen der positiven Quittung.

## Revendications

1. Procédé comprenant :
la réception (202, 208) d'une requête issue d'un dispositif client (102) au niveau d'un dispositif d'équilibrage de charge (110),
la sélection (209), au niveau du dispositif d'équilibrage de charge (110), d'un dispositif de traitement (112-1) à partir d'un ensemble de dispositifs de traitement (112-1, 112-2) dans un réseau de communication afin de servir la requête,
le transfert (210) de la requête depuis le dispositif d'équilibrage de charge (110) jusqu'au dispositif de traitement (112-1),
la réception (216) d'un accusé de réception au niveau du dispositif d'équilibrage de charge (110) en provenance du dispositif client (102), l'accusé de réception comprenant :
une indication de ce que le dispositif client (102) a reçu une réponse provenant du dispositif de traitement (112-1) sélectionné à la requête, laquelle n'a pas traversé le dispositif d'équilibrage de charge (110), et une valeur unique associée au dispositif de traitement (112-1) sélectionné,
le transfert (218) depuis le dispositif d'équilibrage de charge (110) jusqu'au dispositif de traitement (112-1) sélectionné, de l'accusé de réception comportant la valeur unique et l'indication de sorte à ce que le dispositif de traitement (112-1) sélectionné supprime des informations d'état associées à la requête.

2. Procédé selon la revendication 1, dans lequel la sélection (209) du dispositif de traitement (112-1) est effectuée au moins sur la base du contenu associé à la requête.

3. Procédé selon la revendication 1, dans lequel la valeur unique associée au dispositif de traitement (112-1) sélectionné comprend une valeur de marqueur temporel insérée par le dispositif de traitement (112-1) sélectionné, chaque dispositif de traitement (112-1, 112-2) possédant une valeur unique assignée de marqueur horaire.

4. Procédé selon la revendication 1, comprenant en outre l'envoi (204) par le dispositif d'équilibrage de charge (110) d'un accusé de réception au dispositif client (102) à la réception de la requête.

5. Procédé selon la revendication 1, comprenant en outre la réception par le dispositif d'équilibrage de charge (110) d'une valeur issue du dispositif de traitement (112-1) sélectionné signalant au dispositif d'équilibrage de charge (110) d'effectuer de nouveau la sélection d'un dispositif de traitement (112-1) à partir de l'ensemble de dispositifs de traitement (112-1, 112-2) à la réception d'une requête ultérieure issue du dispositif client (102).

6. Appareil comprenant :
une mémoire (312), et
un processeur (310) couplé fonctionnellement à la mémoire (312) afin de former un dispositif d'équilibrage de charge (110) configuré pour :
recevoir une requête issue d'un dispositif client (102), sélectionner un dispositif de traitement (112-1) à partir d'un ensemble de dispositifs de traitement (112-1, 112-2) dans un réseau de communication afin de servir la requête,
transférer la requête au dispositif de traitement (112-1) sélectionné,
recevoir un accusé de réception en provenance du dispositif client (102), l'accusé de réception comprenant :
une indication de ce que le dispositif client (102) a reçu une réponse provenant du dispositif de traitement (112-1) sélectionné à la requête, laquelle n'a pas traversé le dispositif d'équilibrage de charge (110), et une valeur unique associée au dispositif de traitement (112-1) sélectionné,
transférer au dispositif de traitement (112-1) sélectionné, l'accusé de réception comportant la valeur unique et l'indication de sorte à ce que le dispositif de traitement (112-1) sélectionné supprime des informations d'état associées à la requête.

7. Procédé comprenant :
la réception (210) d'une requête issue d'un dispositif client (102), en provenance d'un dispositif d'équilibrage de charge (110) au niveau d'un dispositif de traitement (112-1) sélectionné par le dispositif d'équilibrage de charge (110) à partir d'un ensemble de dispositifs de traitement (112-1, 112-2) d'un réseau de communication, l'envoi (212, 214) au dispositif client (102) d'au moins une réponse issue du dispositif de traitement (112-1) sélectionné sans que la réponse traverse le dispositif d'équilibrage de charge (110), la réponse comprenant une valeur insérée en elle qui est unique pour le dispositif de traitement (112-1) sélectionné,
la réception (218), au niveau du dispositif de traitement (112-1) sélectionné, en provenance du dispositif d'équilibrage de charge (110), d'un accusé de réception envoyé (216) au dispositif d'équilibrage de charge (110) par le dispositif client (102),
dans lequel l'accusé de réception comprend la valeur unique associée au dispositif de traitement (112-1) sélectionné et une indication de ce que le dispositif client (102) a reçu la réponse à la requête en provenance
du dispositif de traitement (112-1) sélectionné, laquelle n'a pas traversé le dispositif d'équilibrage de charge (110),
la suppression (219), au niveau du dispositif de traitement (112-1) sélectionné, d'informations d'état associées à la requête à la réception de l'accusé de réception.,

8. Appareil comprenant une mémoire (312) et un processeur (310) couplé fonctionnellement à la mémoire (312) dans le but de former un dispositif de traitement (312-1) configuré pour :
recevoir une requête en provenance d'un dispositif d'équilibrage de charge (110), le dispositif de traitement (112-1) étant sélectionné par le dispositif d'équilibrage de charge (110) à partir d'un ensemble de dispositifs de traitement (112-1, 112-2) d'un réseau de communication,
envoyer au dispositif client (102) au moins une réponse sans que la réponse traverse le dispositif d'équilibrage de charge (110), la réponse comprenant une valeur insérée en elle qui est unique pour le dispositif de traitement (112-1) sélectionné,
recevoir, en provenance du dispositif d'équilibrage de charge (110), un accusé de réception envoyé au dispositif d'équilibrage de charge (110) par le dispositif client (102), l'accusé de réception comprenant la valeur unique associée au dispositif de traitement (112-1) sélectionné et une indication de ce que le dispositif client (102) a reçu la réponse à la requête en provenance du dispositif de traitement (112-1) sélectionné, laquelle n'a pas traversé le dispositif d'équilibrage de charge (110), supprimer des informations d'état associées à la requête à la réception de l'accusé de réception.
